# EUROPÄISCHE PATENTSCHRIFT

(11) **EP 2 308 627 B1**
(45) Veröffentlichungstag und Bekanntmachung des Hinweises auf die Patenterteilung: **19.09.2012**
(21) Anmeldenummer: 10009904.3
(22) Anmeldetag: 20.09.2010
(51) Int. Cl.: B23F 17/00, B23F 5/04, B23Q 11/10, B24B 55/02

(54) **Hartfeinbearbeitungsmaschine zum Hartfeinbearbeiten eines Werkstuecks**
Precision grinding machine for precision grinding of a workpiece
Machine de traitement dur et fin pour le traitement dur et fin d'une pièce usinée

(30) Priorität: 01.10.2009 DE 102009043676
(43) Veröffentlichungstag der Anmeldung: 13.04.2011
(73) Patentinhaber: Kapp GmbH, 96450 Coburg (DE); NILES Werkzeugmaschinen GmbH, 12681 Berlin (DE)
(72) Erfinder: Dremel, Ralf, 96215 Lichtenfels (DE); Mueller, Frank, 96484 Wiesenfeld (DE); Schenk, Thomas, 96450 Coburg (DE)
(74) Vertreter: Gosdin, Michael

(56) Entgegenhaltungen:
- EP-A2- 0 924 028
- DE-A1- 10 322 991
- DE-A1-102006 009 547
- DE-U1- 29 900 753
- US-A- 4 961 289

## Beschreibung

Die Erfindung betrifft eine Hartfeinbearbeitungsmaschine zum Hartfeinbearbeiten eines Werkstücks, die mindestens zwei unterschiedliche Hartfeinbearbeitungswerkzeuge umfasst, die auf einer Werkzeugspindel angeordnet sind, wobei die Werkzeugspindel in Richtung ihrer Achse verschieblich auf einem Werkzeugträger angeordnet ist, der relativ zu einem Maschinenbett translatorisch verschieblich ist, und wobei die Hartfeinbearbeitungsmaschine weiterhin Kühlschmierstoffzuführmittel für die Zuleitung von Kühlschmierstoff zur Bearbeitungsstelle zwischen Werkstück und Hartfeinbearbeitungswerkzeug aufweist.

Eine solche Maschine ist beispielsweise in der US 4 961 289 A offenbart. Derartige Hartfeinbearbeitungsmaschinen werden beispielsweise bei der Zahnradherstellung als Verzahnungsschleifmaschinen eingesetzt. Dabei ist häufig eine Aufteilung des abzuschleifenden Aufmaßes vorgesehen, so dass das Zahnrad zunächst geschruppt und anschließend geschlichtet wird. Für das Schruppen kann eine Schleifschnecke eingesetzt werden, wobei dann das kontinuierliche Wälzschleifen zum Einsatz kommt; das Schlichten kann mit einer Profilschleifscheibe im Profilschleifverfahren erfolgen.

Damit der Schleifprozess einwandfrei durchgeführt werden kann und insbesondere eine thermische Überlastung der Zahnflanke vermieden wird, ist eine zuverlässige Versorgung der Kontaktstelle zwischen Schleifwerkzeug und Werkstück sicherzustellen, was durch die Anordnung von Kühlschmierstoffzufilhrmittel erfolgt. Die DE 103 22 991 Al offenbart eine Sprühdüsenanordnung, bei der zwecks Abdeckung der Werkzeugbreite mit Kühlschmiermittel mehrere Sprühdüsen nebeneinander angeordnet werden können. Andere Lösungen sind aus der DE 10 2006 009 547 A1, aus der DE 299 00 753 U1 und aus der EP 0 924 028 A2 bekannt.

Für die beiden oben genannten Verfahren bestehen hinsichtlich einer sicheren Vermeidung thermischer Werkstückschädigungen deutlich unterschiedliche Anforderungen an die Kühlmittelzufuhr:

Beim kontinuierlichen Wälzschleifen wird aufgrund des Zusammenhangs zwischen Schnittgeschwindigkeit und Bearbeitungszeit üblicherweise mit Schnittgeschwindigkeiten, d. h. Umfangsgeschwindigkeiten der Schleifschnecke, von ca. 60 m/s oder mehr gearbeitet. Zur sicheren Vermeidung thermischer Schädigungen der Werkstückrandzone ist eine möglichst geringe Differenz zwischen Umfangsgeschwindigkeit der Schleifschnecke und der Austrittsgeschwindigkeit des Kühlmittelstrahles anzustreben, d. h. eine relativ hohe Austrittsgeschwindigkeit des Kühlschmierstoffs aus der Kühlschmierstoffdüse ist erforderlich. Diese hohe Geschwindigkeit wird durch einen kleinen Düsenaustrittsquerschnitt und einen hohen Versorgungsdruck erzeugt. Unter diesen Bedingungen stellt sich ein relativ geringer Volumenstrom ein, der sich jedoch nicht negativ auf den Schleifprozess oder die erzeugte Werkstückqualität auswirkt.

Beim Profilschleifen wird dagegen üblicherweise mit niedrigeren Schnittgeschwindigkeiten zwischen 25 und 35 m/s gearbeitet. Dieses Verfahren erfordert eine sichere Abdeckung des gesamten Schleifscheibenprofils durch den Kühlmittelstrahl. In Abhängigkeit von der jeweiligen Profilbreite und -höhe ergibt sich daraus die Forderung nach einem relativ großen Düsenaustrittsquerschnitt, wobei sich ein Kühlmittelstrahl mit geringer Austrittsgeschwindigkeit und niedrigem Druck, aber relativ hohem Volumenstrom einstellt.

Neben dem genannten speziellen Anwendungsfall der Hartfeinbearbeitung von Verzahnungen sind weitere allgemeine Fälle denkbar, in denen mehrere Werkzeuge mit deutlich unterschiedlichen Anforderungen an die Kühlmittelzufuhr nacheinander zum Einsatz kommen.

Nach einer üblichen Fertigungsmethode sind im Falle mehrerer Werkzeuge diese in Achsrichtung fluchtend auf einem Werkzeugdorn angeordnet, der zwischen einem Spindelmotor und einem Gegenlager eingespannt ist. Die gesamte Einheit bestehend aus Spindelmotor, Gegenlager, Werkzeugdorn und Werkzeugen ist auf einem in Achsrichtung der Werkzeuge beweglichen Schlitten (Werkzeugträger) angeordnet (zumeist als Y-Achse bezeichnet), mit dem die Werkzeuge in die für die Bearbeitung notwendige axiale Position relativ zum Werkstück gebracht werden.

Die zum Wälzschleifen eingesetzten schneckenförmigen Werkzeuge sind üblicherweise deutlich breiter als die reine Eingriffsbreite, die sich durch den Eingriff von Werkzeug und Werkstück ergibt. Dies hat den Zweck, diverse Shiftmethoden anwenden zu können, um die Zahnräder in spezieller Weise zu schleifen: Eingesetzt wird zunächst das diskontinuierliche Shiften in Werkzeugachsrichtung (Y-Achse) zwischen Schruppen und Schlichten bzw. zwischen der Bearbeitung einzelner Werkstücke, um neue, unverbrauchte Schneckenbereiche in Eingriff zu bringen. Beim kontinuierlichen Shiften in Werkzeugachsrichtung (Y-Achse) während der Schieifbearbeitung eines Werkstücks (auch als Diagonalschleifen bezeichnet) kann eine gezielte Beeinflussung der Zahnflankentopologie und/oder -oberflächenstruktur erfolgen.

Die hier verwendeten Kühlmitteldüsen können starr ausgeführt sein, d. h. für einen bestimmten, nicht veränderlichen Werkstückdurchmesser optimiert sein, was sich insbesondere für nicht abrichtbare CBN-Schleifwerkzeuge empfiehlt, deren Durchmesser sich nicht ändert. Im Falle von Werkzeugen mit veränderlichem Durchmesser, d. h. namentlich für abrichtbare Schleifwerkzeuge, können die Kühlmitteldüsen so installiert sein, dass diese in einer Ebene, die senkrecht auf der Achse der Werkzeugspindel steht, beweglich angeordnet sind, so dass die Kühlmitteldüse mit abnehmendem Werkzeugdurchmesser entsprechend nachgeführt werden kann. Die Anpassung der Düsenposition an den aktuellen Werkzeugdurchmesser kann durch eine rotatorische oder durch eine translatorische Bewegung erfolgen.

In den vorbekannten Bearbeitungsfällen wird das Werkstück entweder nur mit einem einzigen Werkzeug bearbeitet (z. B. mit einer abrichtbaren Schleifschnecke; das Schruppen und das Schlichten erfolgt mit unterschiedlichen Breitenbereichen des gleichen Werkzeugs) oder es kommen zwei Werkzeuge des gleichen Typs und der gleichen Größe zum Einsatz (z. B. abrichtfreies Profilschleifen mit CBN-Schrupp- und -Schlichtscheibe). In diesen Fällen ist die Verwendung einer einzigen Düse - mit für das jeweils angewendete Werkzeug bzw. Bearbeitungsverfahren optimierten Eigenschaften - problemlos möglich.

Eine Kombination mehrerer Werkzeuge bzw. Bearbeitungsverfahren unterschiedlicher Art kommt üblicherweise zum Einsatz bei der Bearbeitung mehrerer Verzahnungen des gleichen Werkstücks in einer Aufspannung (z. B. Getriebewellen) oder bei der Bearbeitung einer Verzahnung mit unterschiedlichen Verfahren für das Schruppen und das Schlichten (z. B. Schruppen mit abrichtbarem Wälzschleifen, Schlichten mit abrichtfreiem Profilschleifen - wie eingangs erläutert).

In diesen Fällen sind folgende Varianten der Kühlmittelzufuhr bekannt:

Bekannt ist die Verwendung der gleichen Düse (mit oder ohne der oben genannten Durchmessernachführung) für die unterschiedlichen Werkzeuge. Dies hat den Nachteil, dass die Bedingungen der Kühlmittelzufuhr nicht für jedes verwendete Werkzeug optimiert sein können. Deswegen ist die Bearbeitung für mindestens eines der verwendeten Werkzeuge nur mit reduzierter Vorschubgeschwindigkeit möglich, woraus eine längere Bearbeitungszeit und damit ein Wirtschaftlichkeitsverlust resultieren.

Bekannt ist ferner, dass mehrere Düsen auf dem Schlitten der Y-Achse angeordnet sind, die mit dem Schlitten mitfahren, wobei die Düsen ihre Position relativ zum jeweiligen Werkzeug nicht verändern. Als nachteilig ergibt sich in diesem Falle folgendes: Damit im Falle des Wälzschleifens mit einem schneckenförmigen Werkzeug die oben genannten Shiftverfahren angewendet werden können, muss eine auf dem Schlitten der Y-Achse mitfahrende Düse so breit sein wie das gesamte Werkzeug, d. h. deutlich breiter also, als es aufgrund der effektiven Eingriffsbreite zwischen Werkzeug und Werkstück erforderlich wäre. Bei konstanter Austrittshöhe der Düsenöffnung vergrößert sich durch die Verbreiterung der Düse aber auch der Düsenquerschnitt, was im Widerspruch zu den für das Wälzschleifen als optimal geltenden Bedingungen steht. Auch in diesem Fall kann die Bearbeitung aufgrund der nicht optimalen Bedingungen der Kühlmittelzufuhr nur mit reduzierter Vorschubgeschwindigkeit und damit mit längeren Bearbeitungszeiten und daher mit reduzierter Wirtschaftlichkeit durchgeführt werden.

Der Erfindung liegt daher die **Aufgabe** zugrunde, eine Hartfeinbearbeitungsmaschine der eingangs genannten Art so hinsichtlich der Kühlschmierstoffzuführmittel auszubilden, dass die oben genannten Nachteile vermieden werden und dass die Anwendung aller denkbaren Werkzeug- und Verfahrenskombinationen unter optimalen Kühlschmierstoff-Versorgungsbedingungen stattfinden können. Für jeden Werkzeugtyp und für jedes Bearbeitungsverfahren sollen jeweils die als optimal geltenden Bedingungen der Kühlmittelzufuhr eingestellt werden können. Weiterhin soll eine automatische Anpassung der Bedingungen der Kühlmittelzufuhr an das jeweils eingesetzte Werkzeug bzw. Bearbeitungsverfahren innerhalb eines Bearbeitungszyklus ohne Bedienereingriff möglich sein, d. h. ausgelöst durch die Maschinensteuerung.

Die **Lösung** dieser Aufgabe durch die Erfindung ist dadurch gekennzeichnet, dass die Kühlschrnierstoffzuführmittel mindestens eine erste Kühlschmierstoffdüse mit mindestens einer Strahlaustrittsöffnung für Kühlschmierstoff und mindestens eine zweite Kühlschmierstoffdüse mit mindestens einer Strahlaustrittsöffnung für Kühlschmierstoff umfasst, wobei die beiden Kühlschmierstoffdüsen in Richtung der Achse der Werkzeugspindel relativ zueinander verschieblich angeordnet sind, wobei die mindestens eine erste und die mindestens eine zweite Kühlschmierstoffdüse in Richtung der Achse der Werkzeugspindel aneinander vorbei kollisionsfrei bewegbar angeordnet sind, so dass jede der Kühlschrnierstoffdüsen die gleiche Position in Richtung der Achse der Werkzeugspindel einnehmen kann.

Die mindestens eine erste Kühlschmierstoffdüse ist vorzugsweise in Richtung der Achse der Werkzeugspindel ortsfest an oder auf dem Werkzeugträger angeordnet.

Alternativ hierzu ist es aber auch möglich, dass die mindestens eine erste Kühlschmierstoffdüse auf einer Linearführung in Richtung der Achse der Werkzeugspindel relativ zum Werkzeugträger verschieblich angeordnet ist.

Die zweite Kühlschmierstoffdüse ist vorzugsweise in Richtung der Achse der Werkzeugspindel fest an oder auf dem Maschinenbett angeordnet.

Auch hier kann alternativ aber auch vorgesehen sein, dass die zweite Kühlschmierstoffdüse in Richtung der Achse der Werkzeugspindel auf einer Linearführung relativ zum Maschinenbett verschieblich angeordnet ist.

Mindestens eine der Kühlschmierstoffdüsen kann zwecks Einstellung auf den optimalen Abstand zum Werkzeug in einer Ebene beweglich angeordnet sein, die senkrecht auf der Achse der Werkzeugspindel steht. Die Kühlschmierstoffdüse kann hierzu um eine Achse verschwenkbar angeordnet sein, die parallel zur Achse der Werkzeugspindel angeordnet ist. Möglich ist es aber auch, dass die Kühlschmierstoffdüse translatorisch bzw. linear in der Ebene beweglich angeordnet ist, die senkrecht auf der Achse der Werkzeugspindel steht.

Jede der Kühlschmierstoffdüsen kann individuel] gesteuert mit Kühlschmierstoff beaufschlagbar sein; es ist aber auch möglich, dass alle Kühlschmierstoffdüsen gleichzeitig mit Kühlschmierstoff beaufschlagbar sind.

Die Hartfeinbearbeitungswerkzeuge sind bevorzugt als Zahnradbearbeitungswerkzeuge ausgebildet. Ein Zahnradbearbeitungswerkzeug kann dabei eine Schleifscheibe sein, ein anderes eine Schleifschnecke. Eine besonders bevorzugte Ausführungsform sieht in diesem Falle vor, dass die erste Kühlschmierstoffdüse der Schleifscheibe zugeordnet und fest an dem Werkzeugträger angeordnet ist. Die zweite Kühlschmierstoffdüse kann dabei der Schleifschnecke zugeordnet und in Richtung der Achse des Werkzeugträgers fest an dem Maschinenbett angeordnet sein.

Die zweite Kühlschmierstoffdüse kann - in Richtung der Achse der Werkzeugspindel gesehen - von der Achse der Werkzeugspindel weiter entfernt sein als die erste Kühlschmierstoffdüse. Dies erleichtert bzw. ermöglicht das kollisionsfreie Vorbeifahren der Kühlschmierstoffdüsen in Y-Richtung aneinander.

Vorgeschlagen ist also die Kombination mehrerer Düsen, wovon vorzugsweise mindestens eine in Werkzeugachsrichtung beweglich und mindestens eine in Werkzeugachsrichtung ortsfest ist. Beide Düsen können eine Verstellmöglichkeit in der Ebene haben, die senkrecht auf der Achse der Werkzeugspindel steht. Dabei ist vorgesehen, dass die Gestaltung der Düsenformen so gewählt wird, dass eine gleichzeitige, kollisionsfreie Positionierung beider Düsen in jeder Arbeitsposition möglich ist, was insbesondere bei großen Durchmesserunterschieden der verwendeten Werkzeuge leicht zu bewerkstelligen ist. Mehrere Düsen können also eine Bewegung in Werkzeugachsrichtung (z. B. mit der Y-Achse mitfahrend) so ausführen, dass gleichzeitig die Düsen in die gleiche Orthogonalebene zur Werkzeugachse gebracht werden können.

Für den Fall, dass die Düse in einer Ebene senkrecht auf der Achse der Werkzeugspindel (rotatorisch oder translatorisch) beweglich ist, kann insbesondere ein Mechanismus zur Nachführung des sich ändernden Schleifscheibendurchmessers zum Einsatz kommen. Werden derartige bewegliche (einstellbare) Düsen eingesetzt, besteht weiterhin die Möglichkeit, die bewegliche Düse vor dem Vorbeifahren der Düsen aneinander (in Y-Richtung) mittels ihres Verstellmechanismus aus dem Kollisionsbereich herauszufahren, so dass sie problemlos aneinander vorbeifahren können, d. h. bevor die in Werkzeugachsrichtung bewegliche Düse zusammen mit dem entsprechenden Werkzeug in Richtung der Y-Achse in Arbeitsposition bewegt wird.

Die Kühlschmierstoffdüsen können mehr als einen Düsenkanal, d. h. mehr als eine Austrittsöffnung, für Kühlschmierstoff aufweisen. Möglich ist es, dass in einem Düsenkörper mehrere derartige Düsenkanäle vorhanden sind, die gezielt mit Kühlschmierstoff beaufschlagt werden können. Genauso ist es auch möglich, die Kühlschmierstoffdüsen als Doppel- oder Mehrfachdüsen auszubilden, wobei dann mehrere Düsenkörper starr miteinander verbunden sind, die jeweils gezielt mit Kühlschmierstoff beaufschlagbar sind. In all diesen Fällen können die Düsen also entweder gleichzeitig oder getrennt von einander mit Kühlmittel beaufschlagt werden.

In vorteilhafter Weise kann mit der vorgeschlagenen Lösung die oben gestellte Aufgabe vollumfänglich gelöst werden. Demnach wird erreicht, dass auch beim Einsatz verschiedenster Hartfeinbearbeitungswerkzeuge, insbesondere von Schleifwerkzeugen, die Kühlschmierstoff-Versorgungsbedingungen optimiert werden können. Die Anpassung der Kühlschmierstoff zuführmittel ist in einfacher Weise automatisch über die Maschinensteuerung möglich.

Vorgeschlagen sind also Lösungen zur Kühlmittelzufuhr für Bearbeitungsverfahren, bei denen mehrere Werkzeuge nacheinander in der gleichen Position relativ zu dem zu bearbeitenden Werkstück eingesetzt werden und wobei sich die Anforderungen an die Kühlmittelzufuhr (insbesondere betreffend den Austrittsquerschnitt, die Austrittsgeschwindigkeit, den Volumenstrom und den Druck) in Abhängigkeit der eingesetzten Werkzeuge und Bearbeitungsverfahren deutlich unterscheiden.

In der Zeichnung ist ein Ausführungsbeispiel der Erfindung dargestellt. Es zeigen:
- Fig. 1: in perspektivischer Ansicht eine Hartfeinbearbeitungsmaschine, ausgebildet als Verzahnungsschleifmaschine, die eine Schleif- scheibe und eine Schleifschnecke als Schleifwerkzeuge aufweist, die von jeweiligen Kühlschmierstoffdüsen mit Kühlmittel versorgt werden, wobei das Schleifen mit der Schleifschnecke illustriert ist, und
- Fig. 2: die Verzahnungsschleifmaschine gemäß Fig. 1, wobei das Schleifen mit der Schleifscheibe illustriert ist.

In den Figuren ist eine Hartfeinbearbeitungsmaschine 1 in Form einer Verzahnungsschleifmaschine zu sehen, die ein Maschinenbett (Maschinengrundrahmen) 8 aufweist. An diesem ist - unter anderem - ein Werkzeugträger (Schlitten) 7 linear verschieblich angeordnet, der eine Werkzeugspindel 5 trägt. Auf der Werkzeugspindel 5, die als einteilige Spindel ausgeführt sein kann oder die auch aus zwei oder mehreren ggf. auch separat angetriebenen Teilspindeln bestehen kann, sind mindestens zwei Hartfeinbearbeitungswerkzeuge 3, 4 angeordnet, und zwar eine Profilschleifscheibe 3 und eine nur schematisch dargestellte Schleifschnecke 4. Das mit den Werkzeugen 3, 4 zu bearbeitende Werkstück 2 ist auf einer Werkstückspindel 11 gespannt; vorliegend ist die Werkstückachse vertikal ausgerichtet.

Die Werkzeugspindel 5 weist eine Achse 6 auf. In Richtung dieser Achse kann die Werkzeugspindel 5 auf dem Werkzeugträger 7 in die eingetragene Y-Richtung verschoben werden, um die Werkzeuge 3, 4 wahlweise in Eingriff mit dem Werkstück 2 zu bringen. Insoweit entspricht die Verzahnungsschleifmaschine der vorbekannten Bauformen. Die weiteren benötigten Maschinenachsen, die natürlich für die Bearbeitung notwendig sind, werden hier nicht weiter thematisiert, da sie für die Erfindung nicht relevant sind.

Wesentlich ist nunmehr das Kühlschmierstoffzuführmittel, das im Ausführungsbeispiel aus zwei Kühlschmierstoffdüsen 9' und 9" besteht.

Die erste Kühlschmierstoffdüse 9' ist hier fest am Werkzeugträger 7 befestigt und so angeordnet, dass sie die Schleifscheibe 3 optimal mit Kühlschmierstoff versorgen kann. Auf die obigen Ausführungen zur Ausbildung der Düse im Falle des Profilschleifverfahrens und die dabei angestrebten Betriebsparameter wird Bezug genommen.

Die zweite Kühlschmierstoffdüse 9" ist indes (direkt oder indirekt) fest am Maschinenbett 8 angeordnet, d. h. sie ist im Raum absolut ortsfest. Sie ist als Breitschlitzdüse ausgeführt, so dass sie die Schleifschnecke 4 optimal mit Kühlschmierstoff versorgen kann. Auch hier wird auf die obigen Ausführungen Bezug genommen, was die optimale Ausbildung und Betriebsweise einer Düse im Falle des Verzahnungsschleifens mit einer Schleifschnecke anbelangt.

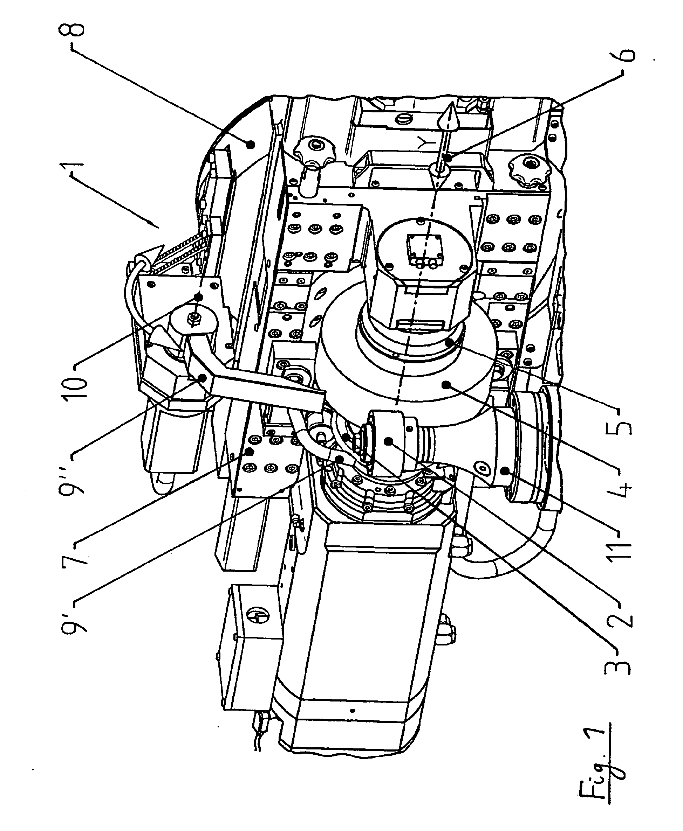

In Fig. 1 ist zu sehen, wie das Werkstück 2 mittels der Schleifschnecke 4 geschruppt wird. Die Werkzeugspindel 5 ist in Achsrichtung Y in die entsprechende Position verfahren. Die zweite Kühlschmierstoffdüse 9" ist aktiviert, die erste Kühlschmierstoffdüse 9' ist abgeschaltet.

Zu erwähnen ist noch, dass vorliegend eine abrichtbare Schleifschnecke 4 eingesetzt wird, die periodisch von einer nicht dargestellten Abrichteinrichtung abgerichtet wird. Demgemäß ändert sich der Schleifschneckendurchmesser allmählich, so dass die zweite Kühlschmierstoffdüse 9" nachgeführt werden muss, um stets optimale Kühlbedingungen sicherzustellen. Hierfür ist die zweite Kühlschmierstoffdüse 9" um eine Achse 10 schwenkbar angeordnet, wobei die Achse 10 parallel zur Achse 6 ist. Durch Verschwenkung der Kühlschmierstoffdüse 9" kann daher der Abstand des Düsenaustritts zur Schleifschneckenoberfläche konstant gehalten werden.

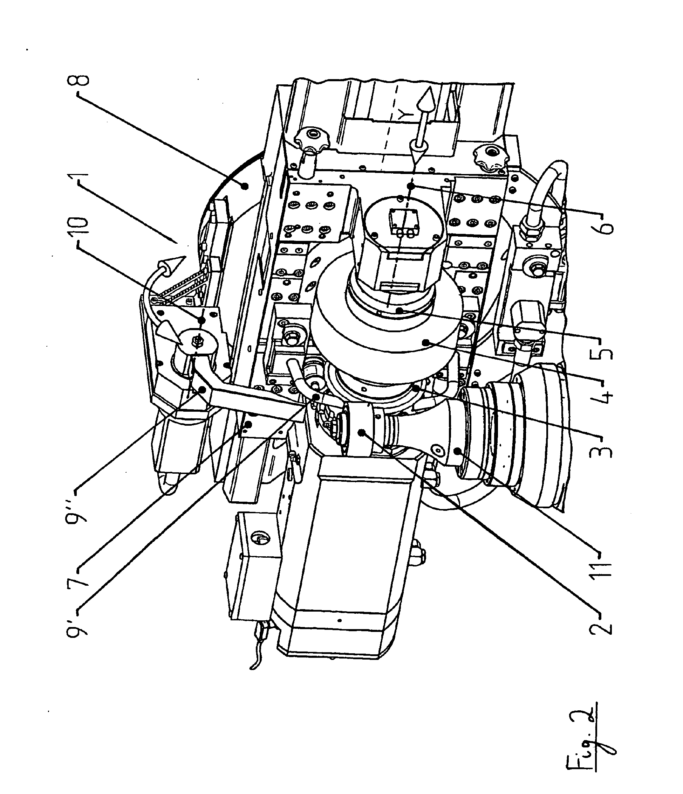

In Fig. 2 ist zu sehen, wie die Werkzeugspindel 5 in Y-Richtung verfahren wurde, um zum Schlichten des Werkstücks 2 die Schleifscheibe 3 in Eingriff zu bringen. Demgemäß wird nun die Kühlschmierstoffdüse 9' aktiviert, während die Kühlschmierstoffdüse 9" abgeschaltet ist.

Wie zu sehen ist, hat vorliegend die Schleifscheibe 3 einen kleineren Außendurchmesser als die Schleifschnecke 4. Demgemäß befindet sich auch die Kühlschmierstoffdüse 9' näher an der Achse 6 der Werkzeugspindel 5 als die Kühlschmierstoffdüse 9". Dies begünstigt es, dass die beiden Kühlschmierstoffdüsen 9', 9" bei Verfahren der Werkzeugspindel 5 in Y-Richtung aneinander kollisionsfrei vorbeifahren können. Hierfür wird gegebenenfalls die Verschwenkung um die Achse 10 verändert, um das kollisionsfreie Passieren der beiden Düsen 9', 9" sicherzustellen. Dies kann automatisch durch die Maschinensteuerung erfolgen.

Soweit vorstehend von einer (im Raum absolut) ortsfesten Anordnung der Düse an oder auf dem Maschinenbett die Rede ist, sei hierzu folgendes angemerkt: Auf dem eigentlichen Maschinenbett ist zumeist ein Maschinenständer (beweglich) angeordnet, wobei auf dem Ständer wiederum ein Schwenkteil (beweglich) angeordnet ist. Auf dem Schwenkteil ist dann z. B. ein Schlitten auf einer Linearführung (für die Y-Achse) beweglich angeordnet.

Unter der Angabe einer ortsfesten Anordnung der Düse an oder auf dem Maschinenbett ist zu verstehen, dass die Düse bei bestimmungsgemäßem Gebrauch während des Schleifvorgangs nicht bewegt wird. Dies ist also definitionsgemäß auch dann der Fall, wenn die Düse - wie es zumeist der Fall sein wird - auf dem Schwenkteil befestigt ist und somit nicht direkt, sondern über das Schwenkteil und den Maschinenständer indirekt mit dem Maschinenbett verbunden ist, so dass die Düse allerdings bei der bestimmungsgemäßer Benutzung relativ zum Bett ortsfest angeordnet ist (obwohl sie durch das Schwenkteil und den Ständer relativ zum eigentlichen Maschinenbett bewegt (verstellt) werden kann).

### Bezugszeichenliste:

- 1: Hartfeinbearbeitungsmaschine
- 2: Werkstück
- 3: Hartfeinbearbeitungswerkzeug (Schleifscheibe)
- 4: Hartfeinbearbeitungswerkzeug (Schleifschnecke)
- 5: Werkzeugspindel
- 6: Achse
- 7: Werkzeugträger
- 8: Maschinenbett (Maschinengrundrahmen)
- 9: Kühlschmierstoffzuführmittel
- 9': erste Kühlschmierstoffdüse
- 9": zweite Kühlschmierstoffdüse
- 10: Achse
- 11: Werkstückspindel

- Y: Achsrichtung der Werkzeugspindel

## Patentansprüche

1. Hartfeinbearbeitungsmaschine (1) zum Hartfeinbearbeiten eines Werkstücks (2), die mindestens zwei unterschiedliche Hartfeinbearbeitungswerkzeuge (3, 4) umfasst, die auf einer Werkzeugspindel (5) angeordnet sind, wobei die Werkzeugspindel (5) in Richtung (Y) ihrer Achse (6) verschieblich auf einem Werkzeugträger (7) angeordnet ist, der relativ zu einem Maschinenbett (8) translatorisch verschieblich ist, und wobei die Hartfeinbearbeitungsmaschine (1) weiterhin Kühlschmierstoffzuführmittel (9) für die Zuleitung von Kühlschmierstoff zur Bearbeitungsstelle zwischen Werkstück (2) und Hartfeinbearbeitungswerkzeug (3, 4) aufweist,
**dadurch gekennzeichnet,**
**dass** die Kühlschmierstoffzuführmittel (9) mindestens eine erste Kühlschmierstoffdüse (9') mit mindestens einer Strahlaustrittsöffnung für Kühlschmierstoff und mindestens eine zweite Kühlschmierstoffdüse (9") mit mindestens einer Strahlaustrittsöffnung für Kühlschmierstoff umfasst, wobei die beiden Kühlschmierstoffdüsen (9', 9") in Richtung (Y) der Achse (6) der Werkzeugspindel (5) relativ zueinander verschieblich angeordnet sind und wobei die mindestens eine erste und die mindestens eine zweite Kühlschmierstoffdüse (9', 9") in Richtung (Y) der Achse (6) der Werkzeugspindel (5) aneinander vorbei kollisionsfrei bewegbar angeordnet sind, so dass jede der Kühlschmierstoffdüsen (9`, 9") die gleiche Position in Richtung (Y) der Achse (6) der Werkzeugspindel (5) einnehmen kann.

2. Hartfeinbearbeitungsmaschine nach Anspruch 1, **dadurch gekennzeichnet, dass** die mindestens eine erste Kühlschmierstoffdüse (9') in Richtung (Y) der Achse (6) der Werkzeugspindel (5) ortsfest an oder auf dem Werkzeugträger (7) angeordnet ist.

3. Hartfeinbearbeitungsmaschine nach Anspruch 1, **dadurch gekennzeichnet, dass** die mindestens eine erste Kühlschmierstoffdüse (9') in Richtung (Y) der Achse (6) der Werkzeugspindel (5) auf einer Linearführung relativ zum Werkzeugträger (7) verschieblich angeordnet ist.

4. Hartfeinbearbeitungsmaschine nach einem der Ansprüche 1 bis 3, **dadurch gekennzeichnet, dass** die zweite Kühlschmierstoffdüse (9") in Richtung (Y) der Achse (6) der Werkzeugspindel (5) fest an oder auf dem Maschinenbett (8) angeordnet ist.

5. Hartfeinbearbeitungsmaschine nach einem der Ansprüche 1 bis 3, **dadurch gekennzeichnet, dass** die zweite Kühlschmierstoffdüse (9") in Richtung (Y) der Achse (6) der Werkzeugspindel (5) auf einer Linearführung relativ zum Maschinenbett (8) verschieblich angeordnet ist.

6. Hartfeinbearbeitungsmaschine nach einem der Ansprüche 1 bis 5, **dadurch gekennzeichnet, dass** mindestens eine der Kühlschmierstoffdüsen (9', 9") in einer Ebene beweglich angeordnet ist, die senkrecht auf der Achse (6) der Werkzeugspindel (5) steht.

7. Hartfeinbearbeitungsmaschine nach Anspruch 6, **dadurch gekennzeichnet, dass** die Kühlschmierstoffdüse (9(, 9") um eine Achse (10) verschwenkbar angeordnet ist, die parallel zur Achse (6) der Werkzeugspindel (5) angeordnet ist.

8. Hartfeinbearbeitungsmaschine nach Anspruch 6, **dadurch gekennzeichnet, dass** die Kühlschmierstoffdüse (9', 9") translatorisch in der Ebene beweglich angeordnet ist, die senkrecht auf der Achse (6) der Werkzeugspindel (5) steht.

9. Hartfeinbearbeitungsmaschine nach einem der Ansprüche 1 bis 8, **dadurch gekennzeichnet, dass** jede der Kühlschmierstoffdüsen (9', 9") individuell gesteuert mit Kühlschmierstoff beaufschlagbar ist.

10. Hartfeinbearbeitungsmaschine nach einem der Ansprüche 1 bis 8, **dadurch gekennzeichnet, dass** alle Kühlschmierstoffdüsen (9', 9") gleichzeitig mit Kühlschmierstoff beaufschlagbar sind.

11. Hartfeinbearbeitungsmaschine nach einem der Ansprüche 1 bis 10, **dadurch gekennzeichnet, dass** die Hartfeinbearbeitungswerkzeuge (3, 4) Zahnradbearbeitungswerkzeuge sind, wobei insbesondere ein Zahnradbearbeitungswerkzeug (3) eine Schleifscheibe ist und ein Zahnradbearbeitungswerkzeug (4) eine Schleifschnecke ist.

12. Hartfeinbearbeitungsmaschine nach Anspruch 11, **dadurch gekennzeichnet, dass** die erste Kühlschmierstoffdüse (9') der Schleifscheibe (3) zugeordnet ist und fest an dem Werkzeugträger (7) angeordnet ist.

13. Hartfeinbearbeitungsmaschine nach Anspruch 11 oder 12, **dadurch gekennzeichnet, dass** die zweite Kühlschmierstoffdüse (9") der Schleifschnecke (4) zugeordnet ist und in Richtung (Y) der Achse (6) des Werkzeugträgers (7) fest an dem Maschinenbett angeordnet (8) ist.

14. Hartfeinbearbeitungsmaschine nach einem der Ansprüche 11 bis 13, **dadurch gekennzeichnet, dass** die zweite Kühlschmierstoffdüse (9") in Richtung (Y) der Achse (6) der Werkzeugspindel (5) gesehen von der Achse (6) weiter entfernt ist als die erste Kühlschmierstoffdüse (9').

## Claims

1. Hard finish machine (1) for hard finishing of a workpiece (2), comprising at least two different hard finish tools (3, 4) which are arranged on a tool spindle (5), wherein the tool spindle (5) is arranged movable in the direction (Y) of its axis (6) on a tool carrier (7), wherein the tool carrier (7) is translational movable relatively to a machine bed (8) and wherein the hard finish machine furthermore comprises cooling lubricant supplying means (9) for the supply of cooling lubricant to the machining region between the workpiece (2) and the hard finish tool (2, 3),
**characterized in that**
the cooling lubricant supplying means (9) comprise at least a first cooling lubricant nozzle (9') having at least one opening for a stream of cooling lubricant and at least a second cooling lubricant nozzle (9") having at least one opening for a stream of cooling lubricant, wherein the two cooling lubricant nozzles (9', 9") are arranged movable relatively to another in the direction (Y) of the axis (6) of the tool spindle (5) and wherein the at least one first and the at least one second cooling lubricant nozzle (9', 9") are arranged movable in the direction (Y) of the axis (6) of the tool spindle (6) in such a way that the cooling lubricant nozzles (9', 9") can pass without collision so that each of the cooling lubricant nozzles (9', 9") can take the same position in the direction (Y) of the axis (6) of the tool spindle (5).

2. Hard finish machine according to claim 1, **characterized in that** the at least one first cooling lubricant nozzle (9') is arranged stationary at or on the tool carrier (7) in the direction (Y) of the axis (6) of the tool spindle (5).

3. Hard finish machine according to claim 1, **characterized in that** the at least one first cooling lubricant nozzle (9') is arranged movable on a linear guide relatively to the tool carrier (7) in the direction (Y) of the axis (6) of the tool spindle (5).

4. Hard finish machine according to one of claims 1 to 3, **characterized in that** the second cooling lubricant nozzle (9") is arranged stationary at or on the machine bed (8) in the direction (Y) of the axis (6) of the tool spindle (5).

5. Hard finish machine according to one of claims 1 to 3, **characterized in that** the second cooling lubricant nozzle (9") is arranged movable on a linear guide relatively to the machine bed (8) in the direction (Y) of the axis (6) of the tool spindle (5).

6. Hard finish machine according to one of claims 1 to 5, **characterized in that** at least one of the cooling lubricant nozzles (9', 9") is arranged movable in a plane which is perpendicular to the axis (6) of the tool spindle (5).

7. Hard finish machine according to claim 6, **characterized in that** the cooling lubricant nozzle (9', 9") is arranged pivotable around an axis (10) which is parallel to the axis (6) of the tool spindle (5).

8. Hard finish machine according to claim 6, **characterized in that** the cooling lubricant nozzle (9', 9") is arranged translational movable in the plane which is perpendicular to the axis (6) of the tool spindle (5).

9. Hard finish machine according to one of claims 1 to 8, **characterized in that** each of the cooling lubricant nozzles (9', 9") is chargeable with cooling lubricant individually controlled.

10. Hard finish machine according to one of claims 1 to 8, **characterized in that** all cooling lubricant nozzles (9', 9") are chargeable with cooling lubricant simultaneously.

11. Hard finish machine according to one of claims 1 to 10, **characterized in that** the hard finish tools (3, 4) are gear machining tools, wherein especially a gear machining tool (3) is a grinding wheel and a gear machining tool (4) is a grinding worm.

12. Hard finish machine according to claim 11, **characterized in that** the first cooling lubricant nozzle (9') is allocated to the grinding wheel (3) and is arranged stationary at the tool carrier (7).

13. Hard finish machine according to claim 11 or 12, **characterized in that** the second cooling lubricant nozzle (9") is allocated to the grinding worm (4) and is arranged stationary at the machine bed (8) in the direction (Y) of the axis (6) of the tool carrier (7).

14. Hard finish machine according to one of claims 11 to 13, **characterized in that** the second cooling lubricant nozzle (9") is arranged with a bigger distance from the axis (6) of the tool spindle (5) than the first cooling lubricant nozzle (9') seen in the direction (Y) of the axis (6).

## Revendications

1. Machine de traitement dur et fin (1) pour le traitement dur et fin d'une pièce usinée (2), qui comprend au moins deux outils de traitement dur et fin différents (3, 4), qui sont disposés sur une broche porte-outil (5), dans laquelle la broche porte-outil (5) est disposée de façon coulissante dans la direction (Y) de son axe (6) sur un porte-outil (7), qui est déplaçable en translation par rapport à un bâti de machine (8), et dans laquelle la machine de traitement dur et fin (1) présente en outre des moyens d'apport de lubrifiant de refroidissement (9) pour amener du lubrifiant de refroidissement au point de traitement entre la pièce usinée (2) et l'outil de traitement dur et fin (3, 4), **caractérisée en ce que** les moyens d'apport de lubrifiant de refroidissement (9) comprennent au moins une première buse à lubrifiant ce refroidissement (9') avec au moins une ouverture de sortie de jet pour du lubrifiant de refroidissement et au moins une deuxième buse à lubrifiant de refroidissement (9") avec au moins une ouverture de sortie de jet pour du lubrifiant de refroidissement, dans laquelle les deux buses à lubrifiant de refroidissement (9', 9") sont disposées de façon déplaçable l'une par rapport à l'autre dans la direction (Y) de l'axe (6) de la broche porte-outil (5) et dans laquelle ladite au moins une première et ladite au moins une deuxième buses à lubrifiant de refroidissement (9', 9") sont disposées de façon mobile l'une à côté de l'autre sans collision dans la direction (Y) de l'axe (6) de la broche porte-outil (5), de telle manière que chacune des buses à lubrifiant de refroidissement (9', 9") puisse occuper la même position dans la direction (Y) de l'axe (6) de la broche porte-outil (5).

2. Machine de traitement dur et fin selon la revendication 1, **caractérisée en ce que** ladite au moins une première buse à lubrifiant de refroidissement (9') est attachée au ou sur le porte-outil (7) de façon fixe dans la direction (Y) de l'axe (6) de la broche porte-outil (5).

3. Machine de traitement dur et fin selon la revendication 1, **caractérisée en ce que** ladite au moins une buse à lubrifiant de refroidissement (9') est disposée de façon déplaçable par rapport au porte-outil (7) sur un guide linéaire dans la direction (Y) de l'axe (6) de la broche porte-outil (5).

4. Machine de traitement dur et fin selon l'une quelconque des revendications 1 à 3, **caractérisée en ce que** la deuxième buse à lubrifiant de refroidissement (9") est attachée au ou sur le bâti de machine (8) de façon fixe dans la direction (Y) de l'axe (6) de la broche porte-outil (5).

5. Machine de traitement dur et fin selon l'une quelconque des revendications 1 à 3, **caractérisée en ce que** la deuxième buse à lubrifiant de refroidissement (9") est disposée de façon déplaçable sur un guide linéaire par rapport au bâti de machine (8) dans la direction (Y) de l'axe (6) de la broche porte-outil (5).

6. Machine de traitement dur et fin selon l'une quelconque des revendications 1 à 5, **caractérisée en ce qu'**au moins une des buses à lubrifiant de refroidissement (9', 9") est disposée de façon mobile dans un plan, qui est perpendiculaire à l'axe (6) de la broche porte-outil (5).

7. Machine de traitement dur et fin selon la revendication 6, **caractérisée en ce que** la buse à lubrifiant de refroidissement (9', 9") est disposée de façon pivotante autour d'un axe (10), qui est disposé parallèlement à l'axe (6) de la broche porte-outil (5).

8. Machine de traitement dur et fin selon la revendication 6, **caractérisée en ce que** la buse à lubrifiant de refroidissement (9', 9") est disposée de façon mobile en translation dans le plan, qui est perpendiculaire à l'axe (6) de la broche porte-outil (5).

9. Machine de traitement dur et fin selon l'une quelconque des revendications 1 à 8, **caractérisée en ce que** chacune des buses à lubrifiant de refroidissement (9', 9") peut être alimentée en lubrifiant de refroidissement par une commande individuelle.

10. Machine de traitement dur et fin selon l'une quelconque des revendications 1 à 8, **caractérisée en ce que** toutes les buses à lubrifiant de refroidissement (9', 9") peuvent être alimentées simultanément en lubrifiant de refroidissement.

11. Machine de traitement dur et fin selon l'une quelconque des revendications 1 à 10, **caractérisée en ce que** les outils de traitement dur et fin (3, 4) sont des outils de traitement de roues dentées, dans laquelle en particulier un outil de traitement de roues dentées (3) est une meule et un outil de traitement de roues dentées (4) est une vis de meulage.

12. Machine de traitement dur et fin selon la revendication 11, **caractérisée en ce que** la première buse à lubrifiant de refroidissement (9') est associée à la meule (3) et est disposée de façon fixe sur le porte-outil (7).

13. Machine de traitement dur et fin selon la revendication 11 ou 12, **caractérisée en ce que** la deuxième buse à lubrifiant de refroidissement (9") est associée à la vis de meulage (4) et est disposée sur le bâti de machine (8) de façon fixe dans la direction (Y) de l'axe (6) du porte-outil (7).

14. Machine de traitement dur et fin selon l'une quelconque des revendications 11 à 13, **caractérisée en ce que** la deuxième buse à lubrifiant de refroidissement (9") est plus éloignée de l'axe (6) que la première buse à lubrifiant de refroidissement (9') en regardant dans la direction (Y) de l'axe (6) de la broche porte-outil (5).
